# EUROPEAN PATENT SPECIFICATION

(11) **EP 1 268 223 B1**
(45) Date of publication and mention of the grant of the patent: **16.02.2005**
(21) Application number: 99964241.6
(22) Date of filing: 14.12.1999
(51) Int. Cl.: B60C 1/00

(54) **TREAD FOR A LIGHT TRUCK OR AUTOMOBILE TIRE**
REIFENLAUFFLÄCHE FÜR LIEFERWAGEN ODER PKW
BANDE DE ROULEMENT POUR PNEU DE CAMION LEGER OU D'AUTOMOBILE

(30) Priority: 24.06.1999 US 106959
(43) Date of publication of application: 02.01.2003
(73) Proprietor: The Goodyear Tire & Rubber Company, Akron, Ohio 44316-0001 (US)
(72) Inventor: WELBES, Paul, L-9184 Schrondweiler (LU); LARDO, Claude, L-1744 Luxembourg (LU)
(74) Representative: Kutsch, Bernd
(86) International application number: PCT/US1999/029527
(87) International publication number: WO 2001/000427

(56) References cited:
- EP-A- 0 640 498
- BE-A- 739 493
- DE-U- 8 708 747
- US-A- 3 534 798
- US-A- 3 682 220
- US-A- 5 415 215
- US-A- 5 658 404

## Description

### Technical Field

This invention relates to a tread for a pneumatic light truck or automobile tire. More particularly, the tread is designed for heavily loaded on road applications.

### Background Art

With the continuing rise in popularity of light trucks and cargo vans, there exists a need to provide tires that have the ability to be driven on paved roads while carrying heavy loads without excessive noise yet also to be capable of being driven in heavy snow or wet roads. Often these tires will be driven in flooded or wet roadway conditions. As an added condition, these multipurpose traction demands for the tire must be coupled with excellent tread wear.

Historically, tires have been able to meet one or two of the above-referenced design requirements but usually at the sacrifice of the other design features.

Snow tires for cargo van tires would achieve good traction usually by opening the tread pattern and providing large block type tread elements. These tires generally were very noisy and had poor treadwear when driven at highway speeds on paved roads.

A latter developed asymmetric nondirectional tire was developed for the light truck and sport utility vehicles called the Wrangler GSA. This tire employed a unique triple traction feature that provides excellent uniform wear across the tread pattern regardless of the wheel position. The tire has good noise and more than adequate traction in a variety of conditions such as snow, off road, and on road wet or dry. The tread pattern disclosed in US-A- 5,415,215 was one of the first truly multipurpose tires for these types of vehicles. The Wrangler GSA tire has been commercially very successful.

From that tire, a superior wet traction tire was developed employing two wide aquachannels in combination with the triple traction feature. The tire has been entitled the Wrangler Aquatred and it is disclosed in EP-A- 681 929. This tire demonstrated that deep-water traction could be enhanced without sacrificing the wear and other performance features of the original Wrangler GSA tire.

The Wrangler Aquatred demonstrated that while the all around performance of these light truck and sport utility tires must be very good, some drivers still have special needs or concerns requiring the more specialized type tire performance in one or more feature.

A particular specialized problem arises in the application wherein heavily loaded cargo trucks such as the light truck or cargo van size vehicles are concerned. These vehicles are primarily driven on paved roads. The commercial nature of this vehicle demands that the tires exhibit excellent treadwear and very low tire noise. The commonly accepted tread for such a vehicle has generally been a ribbed-type tread. The ribs are generally circumferentially continuous bands of rubber. The use of lateral grooves is limited primarily because lateral grooves accelerate the rate of treadwear. This is due to the fact that voids such as grooves generally provide traction, but naturally a loss of treadwear results because the net-road contacting area is reduced by the use of grooves. A second contributing factor to the loss of treadwear is the lateral grooves create an entry and exit point into and out of the tires contact patch that can initiate heel/toe wear.

For these reasons, the tire designers prefer to employ ribs where possible. The other added benefit to ribs are they are inherently more quiet that tread block elements.

The dilemma is to devise a way to increase the traction performance of these treads without sacrificing treadwear or noise performance of rib-type treads. While the rib-type tread wears generally well, it has occurrences of irregular wear along the edges of the circumferentially continuous grooves. This irregular wear is most problematic when the ribs exhibit variable stiffness.

There has been a continual trade-off in attempting to increase the aggressive wet road and snow traction performance of these tires while maintaining the treadwear durability and noise constraints.

BE 739493 and US 3534798 disclose treads having zigzag circumferen/tial grooves with ribs located between the grooves and having overlapping bent grooves.

The invention disclosed in this patent application teaches a novel tread that is both quiet and long wearing while also achieving excellent road traction.

### Summary of the Invention

A tread 12 for a tire 10 has two or more circumferentially continuous grooves 20,22,24 and a continuous rib 30,32 between each pair of circumferentially continuous grooves 20,22 or 22,24.

The tread 12 has a plurality of circucnferentially spaced hook-shaped semi-blind grooves 40 originating each in a circumferentially extending groove 20,22,24, arranged in two rows 1,2 in each continuous rib 30,32. The first row 1 of hook-shaped semi-blind grooves 40 intersect an adjacent circumferentially continuous groove 20,22,24. Each ofthe hook-shaped semi-blind grooves 40 in each row 1,2 is inclined obliquely as measured from a centerline 45 bisecting the hook-shaped semi-blind grooves 40 relative to the circumferentially continuous groove.

In one embodiment the hook-shaped semi-blind grooves 40 of the second row 2 are similarly oriented, but oppositely inclined relative to the hook-shaped semi-blind grooves 40 of row 1 within a respective rib 30,32.

In an alternative embodiment the hook-shaped semi-blind grooves of the second row are similarly inclined, but oppositely oriented to the hook-shaped semi-blind grooves 40 of row 1 within a respective rib 30,32.

In the preferred embodiment the hook-shaped semi-blind grooves 40 has an open portion 41 originating from the circumferentially continuous groove 20,22,24 and extending to the bisecting centerline 45. Thereafter, the blind portion 42 of the groove 40 extends substantially circumferentially to an end 47. A sipe incision 50 extends the end 47 from and is oriented in the same direction as the blind portion 42. Most preferably the circumferentially spaced hook-shaped semi-blind grooves 42 and the sipe incisions 50 extending therefrom are spaced uniformly from each other within each row, and are uniformly spaced from the laterally adjacent hook-shaped semi-blind grooves wherein the tread stiffness of each rib 30,32 adjacent each circumferentially continuous groove 20,22,24 is reduced by the grooving generally uniformly and across the rib laterally, the bending stiffness of the rib is decreased by the orientation of the hook-shaped semi-blind grooves 40 enabling the ribs 30,32 to compliantly bend into and out of the tires contact patch as the tire rotates.

The most preferred embodiment tire tread 12 has three circumferentially continuous grooves 20,22,24, and two continuous ribs 30,32. Each rib 30,32 is adjacent to and between a pair of circumferentially continuous grooves 20,22 or 22,24. The hook-shaped semi-blind grooves 40 of one rib 30,32 are similarly oriented, but oppositely inclined within each respective rib 30,32, but are oppositely oriented relative to the hook-shaped semi-blind grooves 40 of the opposite rib.

In this preferred embodiment, the hook-shaped semi-blind grooves 40 of each rib 30,32 intersecting a common groove 22, intersect the common circumferentially continuous groove 22 at a substantially circumferentially aligned location relative to the intersection of the axially adjacent hook-shaped semi-blind grooves 40 of the other rib 30 or 32.

The tread 12 has a pair of lateral tread edges 14,16 defining the tread width TW and the distance halfway between the lateral tread edges 14,16 defines the equatorial plane EP of the tread 12 and the common circumferentially continuous groove 22 is centered at the equatorial plane EP of the tread 12.

It is further believed desirable that each hook-shaped semi-blind groove 40 has its centerline oriented at an angle θ in the range of 30° to 60°, preferably about 45° relative to the equatorial plane EP of the tread.

In each embodiment the tread 12 has a pair of shoulder ribs 34,36. A first shoulder rib 34 is adjacent to and lies between the first lateral edge 14 and a circumferentially continuous groove 20. A second shoulder rib 36 is adjacent to the second lateral edge 16 and lies between the circumferentially continuous groove 24 and the second lateral edge 16. Each shoulder rib has a plurality of circumferentially spaced curved grooves intersecting an adj acent circumferentially continuous groove 20,24 at locations in substantially linear alignment with the location of intersection of the hook-shaped semi-blind grooves 40 and the respective circumferentially continuous grooves 20,24.

Preferably each curved groove 46 changes orientation by about 90° as the groove extends outwardly toward a lateral tread edge 14,16. Each curved groove has a full depth D at the lateral extremes and a reduced depth d therebetween the lateral extremes, d being about 50% of D or less.

### Brief Definitions of the Drawings

Fig. 1 is a perspective view of the tread according to a first embodiment of the invention.
Fig. 2 is a plan view of the tread of Fig. 1.
Fig. 3 is an enlarged fragmentary view of the tread of Fig. 2.
Fig. 4 is a cross-sectional view of the tire of Fig. 2.
Fig. 5 is a cross-sectional view of the curved groove 46 of Fig. 4.
Fig. 6 is a perspective view of the tread according to a second embodiment of the invention.
Fig. 7 is a plan view of the tread of Fig. 6.
Fig. 8 is an enlarged fragmentary view of the tread of Fig. 7.
Fig. 9 is a cross-sectional view of the tread of Fig. 7.

### Definitions

For ease of understanding this disclosure the following items are disclosed:
"Aspect ratio" of the tire means the ratio of its section height SH to its section width SW multiplied by 100% for expression as a percentage.
"Asymmetric tread" means a tread that has a tread pattern not symmetrical about the centerplane or equatorial plane EP of the tire.
"Circumferential" means lines or directions extending along the perimeter of the surface of the annular tread perpendicular to the axial direction.
"Equatorial plane EP" means the plane perpendicular to the tire's axis of rotation and passing through the center of its tread.
"Footprint" means the contact patch or area of contact of the tire tread with a flat surface at zero speed and under normal load and pressure.
"Groove" means an elongated void area in a tread that may extend circumferentially or laterally about the tread in a straight, curved, or zigzag manner. Circumferentially and laterally extending grooves sometimes have common portions. The "groove width" is equal to tread surface are occupied by a groove or groove portion, the width of which is in question, divided by the length of such groove or groove portion; thus, the groove width is its average width over its length. Grooves may be of varying depths in a tire. The depth of a groove may vary around the circumference of the tread, or the depth of one groove may be constant but vary from the depth of another groove in the tire. If such narrow or wide grooves are of substantially reduced depth as compared to wide circumferential grooves, which they interconnect, they are regarded as forming "tie bars" tending to maintain a rib-like character in the tread region involved. As used herein a groove is intended to have a width large enough to remain open in the tires contact pitch or footprint.
"Inboard side" means the side of the tire nearest the vehicle when the tire is mounted on a wheel and the wheel is mounted on the vehicle.
"Lateral" means an axial direction.
"Net contact area" means the total area of ground contacting elements between defined boundary edges divided by the gross area between the boundary edges as measured around the entire circumference of the tread.
"Net-to-gross ratio" means the total area of ground contacting tread elements between the lateral edges around the entire circumference of the tread divided by the gross area of the entire tread between the lateral edges.
"Non-directional tread" means a tread that has no preferred direction of forward travel and is not required to be positioned on a vehicle in a specific wheel position or positions to ensure that the tread pattern is aligned with the preferred direction of travel. Conversely, a directional tread pattern has a preferred direction of travel requiring specific wheel positioning. "Axial" and "axially" means lines or directions that are parallel to the axis of rotation of the tire.
"Outboard side" means the side of the tire farthest away from the vehicle when the tire is mounted on a wheel and the wheel is mounted on the vehicle.
"Radial" and "radially" means direction radially toward or away from the axis of rotation of the tire.
"Rib" means a circumferentially extending strip of rubber on the tread which is defined by at least one circumferential groove and either a second such groove or a lateral edge, the strip being laterally undivided by full-depth grooves.
"Sipe" or "incision" means small slots molded into the tread elements of the tire that subdivide the tread surface and improve traction, sipe are designed to close when in the tires contact patch or footprint as distinguished from grooves.
"Tread element" or "traction element" means a rib or a block element.

### Detailed Description of the Invention

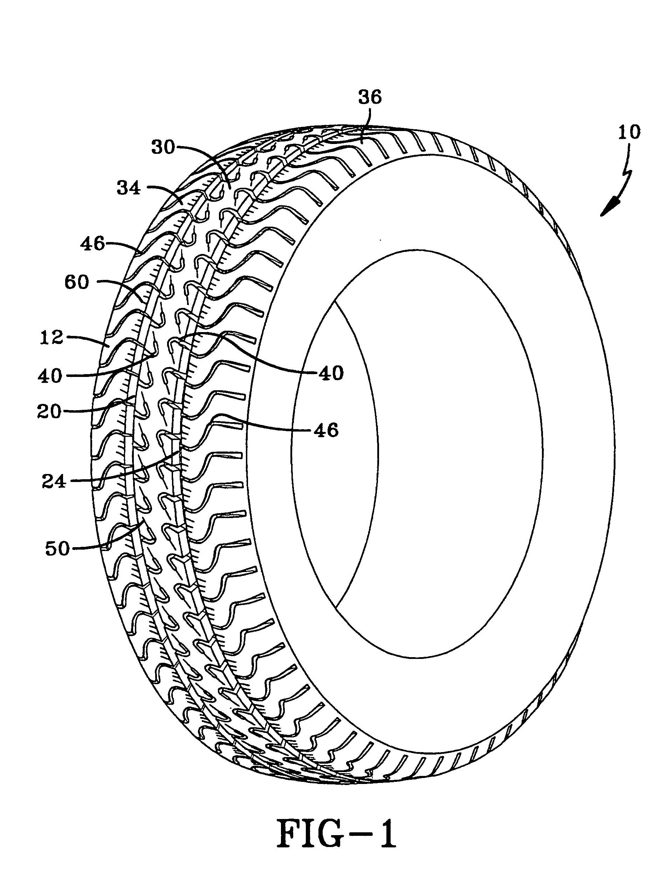

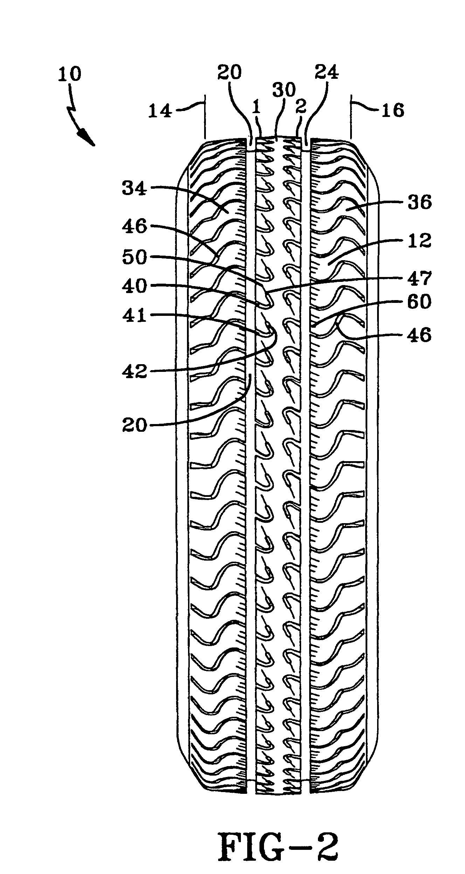

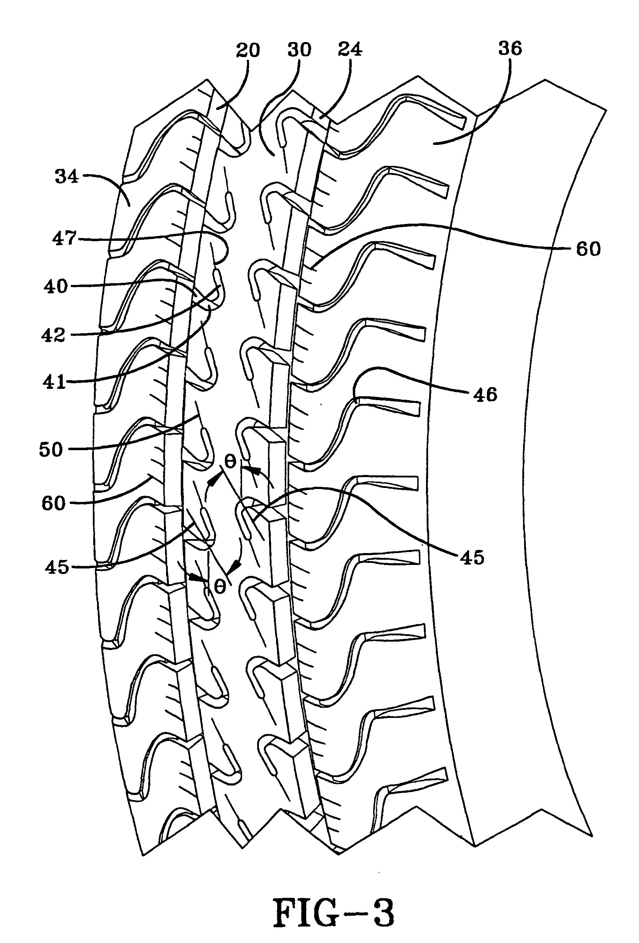

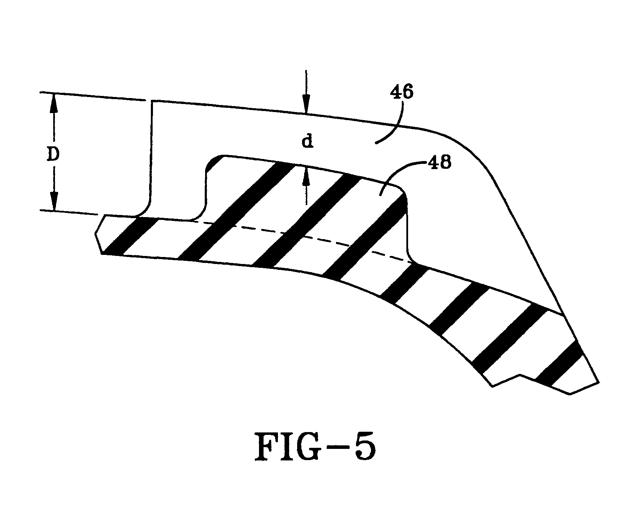

With the reference to Figs 1-5, a tire 10 having a treat 12 according to a first embodiment of the present invention is shown. The tread 12 when configured annularly has an axis of rotation R, first and second lateral edges 14,16.

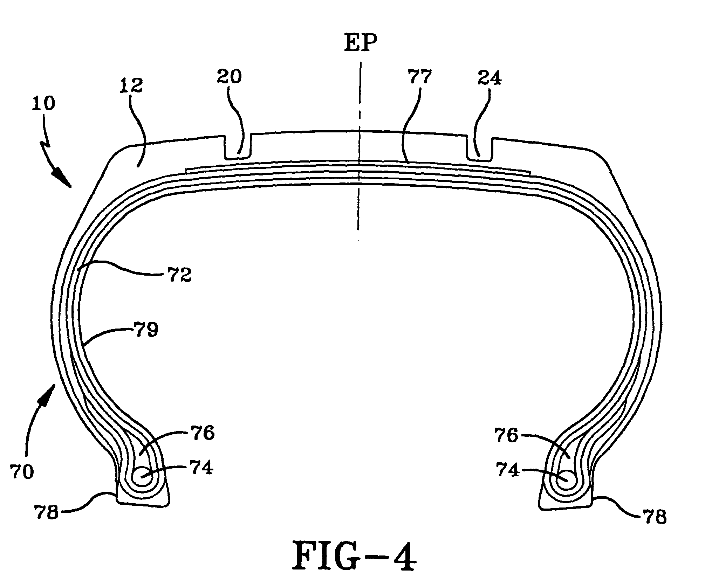

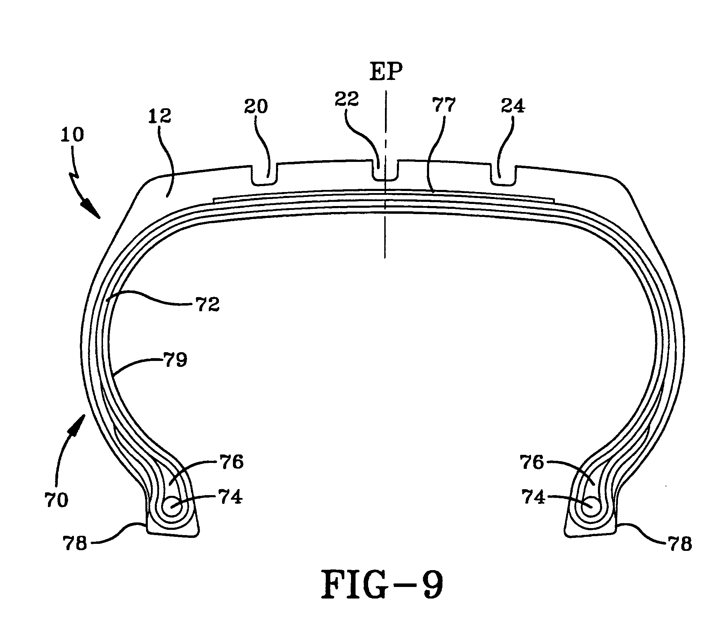

As shown in Figs 4 and 9, the tread 12 when used with a tire 10 employs a tire 10 preferably having a carcass 70 with one or more plies 72 reinforced by radially extending synthetic or metal cords and a pair of substantially inextensible bead cores 74, an apex 76 radially above the bead cores 74 and a belt reinforcing structure 77 radially outward of the plies 72. The tire 10 as shown has an air impervious halobutyl liner 79 and a rubber chafer 78 common in tubeless type tires.

While the carcass is considered important, the focus of the present invention resides in the tread 12 and its unique construction. In the first embodiment as shown in Fig. 1, the tread 12 has two circumferentially continuous grooves 20,24. Interposed between the two circumferentially continuous grooves is a rib 30 that extends continuously around the circumference of the tread 12. The rib 30 has a plurality of circumferentially spaced hook-shaped semi-blind grooves 40 arranged in a first row 1 and a second row 2. The hook-shaped semi-blind grooves 10 of the first row 1 originate at the circumferentially continuous groove 20 and the hook-shaped semi-blind grooves 40 of the second row 2 originates from the circumferentially continuous groove 24. Each hook-shaped semi-blind grooves 40 extends obliquely into the rib, having a first open portion 41 intersecting the circumferential grooves 20 or 24 and a blind portion 42 extending from the open portion 41. A centerline 45 bisecting the two portions 41,42 as used herein defines the inclination of the hook-shaped semi-blind grooves 40.

As illustrated the centerline 45 of the hook-shaped semi-blind grooves 40 is inclined at an angle θ in the range of 30° to 60° relative to the equatorial plane EP of the tread 12. The equatorial plane EP of the tread 12 lies midway between a pair of lateral tread edges and perpendicular to the axis of rotation of the tire 10.

The blind portion 42 extends to an end 47 at which point a sipe incision 50 extends. The sipe incision 50 has virtually no width and accordingly is closed in the treads contact patch. The hook-shaped semi-blind grooves 40 preferably have a width in the range of 2 mm to about 9 mm. The width of the hook-shaped semi-blind grooves diminishes continuously from the groove portion adjacent the circumferentially extending grooves 20,22,24 toward the interior of the rib and preferably varies from 5 to 7.5 mm at the intersection of the circumferentially continuous groove and the width at the end portion of the semi-blind grooves varies from 2 to 2.5 mm.

The orientation of the hook-shaped semi-blind grooves 40 accept fluids directing them laterally inwardly and expelling the fluid as the tire rotates in the generally circumferentially extending direction.

Similarly the noise generated by the tread at the rib 30 at least partially directs itself laterally inwardly and is expelled as the tire rotates circumferentially from the blind portion 42. This assists in reducing the tread noise appreciably.

The use of circumferentially extending grooves 20,22,24 provide openings for the tire generated noise to be further dampened.

The shoulders of the tread 12 adjacent each lateral tread edge 14,16 has a rib 34,36. The ribs 34,36 each have a plurality of circumferentially spaced curved grooves 46. Each curved groove 46 originates at a circumferentially continuous groove 20,24 and at its origin the curved groove 46 is substantially linearly aligned with a hook-shaped semi-blind grooves 40 such that the originating open portion 41 is inclined similarly to the originating portion of the curved groove 46. The curved groove 46 bends about 90° relative to its origin and then opens laterally over the tread shoulders. In each bend of the curved groove 46 is a tie bar 48. The curved groove 46 has a full groove depth D at the lateral extremes and a reduced depth d therebetween the lateral extremes, d being about 50% of D or less. This shoulder rib grooving provides additional traction grooving for the tread 12. The shoulder rib grooving has excellent noise dampening properties because the groove cross-sectional area goes from large to small to large creating a contraction then an expansion of the acoustical sound waves. This dampening is increased by the curvature of the grooves 46, which at the lateral extreme takes on abrupt 90° turn as the air exhaust over the shoulder. These features greatly reduce the noise generation of the tread.

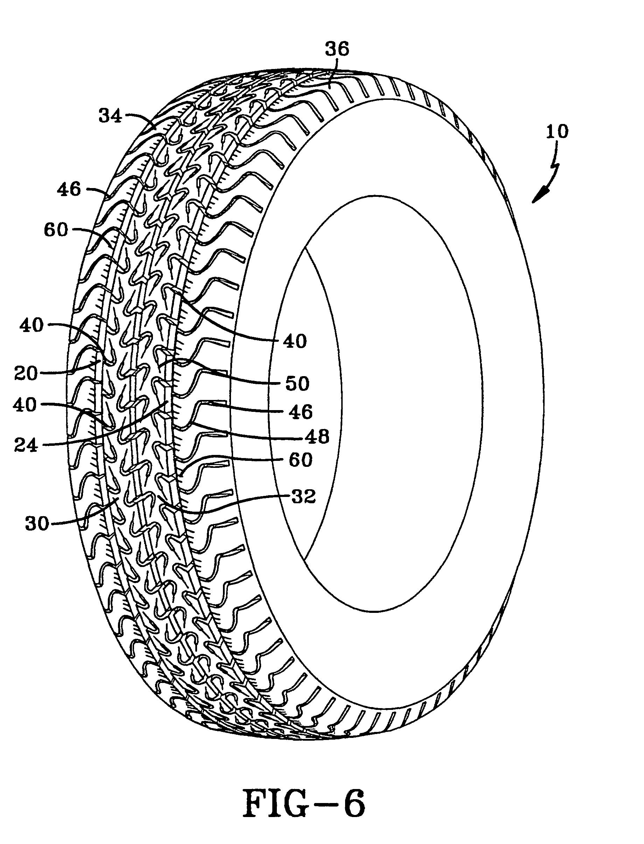

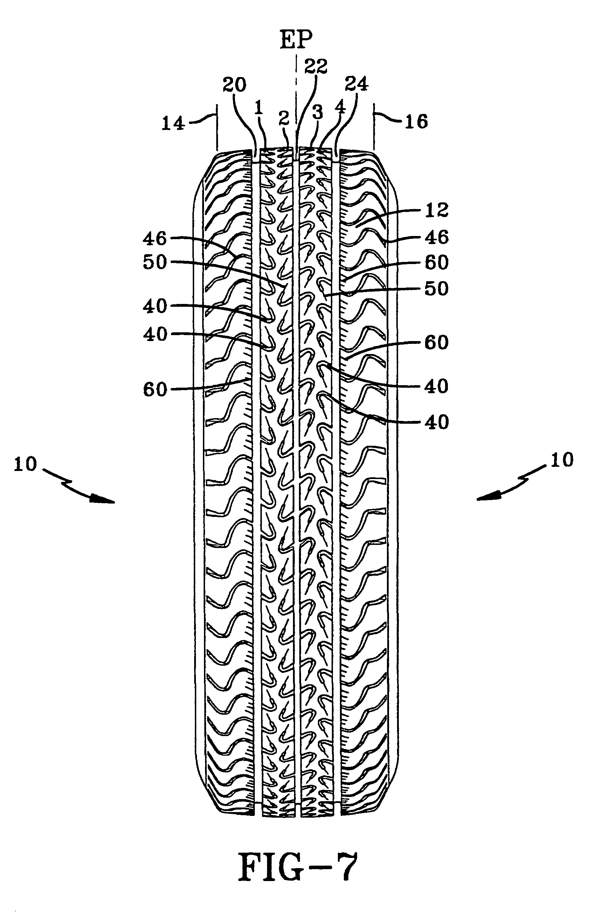

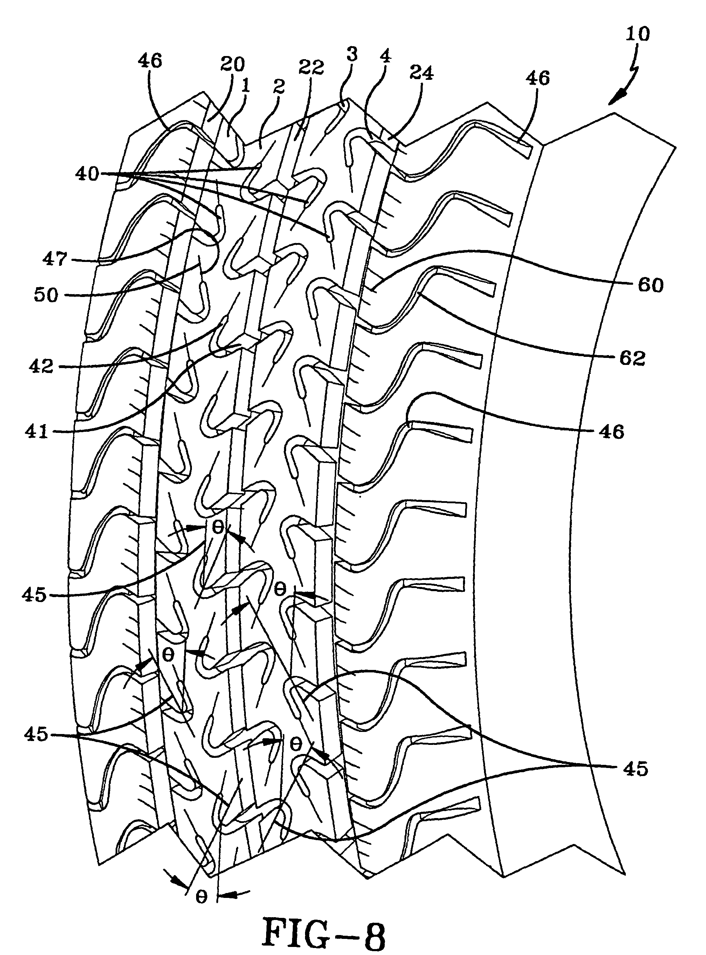

All of the features described above in reference to the tire 10 and tread 12 of Figs. 1-5 apply to the second embodiment tire 10 of Figs 6 through 9.

As shown in Fig 6, the second embodiment tire 10 has the tread 12 having three circumferentially continuous grooves 20,22,24 and two ribs 30,32 located between the grooves 20,22,24.

In this embodiment the groove 22 is a common groove to both adjacent ribs 30,32. The hook-shaped semi-blind grooves 40 of each rib 30,32 intersecting the common circumferentially continuous groove 22, intersects the groove 22 at a substantially circumferentially aligned location relative to the intersection of the axially adjacent hook-shaped semi-blind grooves 40 of the other rib 30, or 32.

An important difference from the first embodiment tread 12 having a single central rib 30 is that the hook-shaped semi-blind grooves 40 in the rib 30 are arranged in a first row 1 and a second row 2 wherein the grooves 40 in the first row 1 are similarly oriented but oppositely inclined with respect to the other row 2 of grooves 40. Additionally, the hook-shaped semi-blind grooves 40 of the second rib 32 are also arranged in two rows 3,4, the row 3 being similarly oriented, but oppositely inclined relation to the grooves 40 of row 4 with both rows 3 and 4 of grooves 40 being opposite oriented relative to both rows 1 and 2 of grooves 40. The tread 12 of Figs 6 through 9 is most preferred because the four rows 1,2,3,4 of hook-shaped semi-blind grooves 40 creates a large increase in traction capability that enhances the heavy loaded cargo van handling characteristics and increases the snow traction capability of the tire due in part to the numerous use of sipe incisions 50 extending from each hook-shaped semi-blind grooves 40.

In each shoulder rib 34,36 a series of three sipes 60 are located between each curved groove 46 at the edge of the circumferentially continuous groove 20,24. The sipes 60 help in reducing river wear along the edge of the shoulder rib 34,36.

A technically significant feature ofboth embodiments is that the ribs 30,32 have the hook-shaped semi-blind grooves 40 spaced such that the edges or the ribs adjacent the grooves 20,22,24 have a uniform lateral bending stiffness and circumferential stiffness. Furthermore, the oblique inclination of the grooves means that in the central portion of each rib 30,32 the bending stiffness is also reduced. This enables the tread to easily enter and leave the contact patch or footprint without creating undue stresses on the tread or the underlying belt reinforcing structure 77 of the tire carcass 70.

For the reasons stated above, the tread 12 in both embodiments yields an extremely durable design having improved on-road traction under heavy load and snow conditions while also maintaining low noise levels.

## Claims

1. A tread for a tire (10), the tread (12) having two or more circumferentially continuous grooves (20,22,24) and a continuous rib (30, 32) between an adjacent pair of circumferentially continuous grooves (20, 22), and wherein the tread (12) comprises a plurality of circumferentially spaced hook-shaped semi-blind grooves (40) originating each in a circumferentially extending groove (20, 22, 24), the hook-shaped semi-blind grooves (40) being arranged in two rows (1, 2, 3, 4) in the continuous rib (30, 32): a first row (1, 3) of hook-shaped semi-blind grooves (40) with each hook-shaped semi-blind groove (40) being inclined obliquely as measured from a centerline (45) bisecting the hook-shaped semi-blind groove (40), and a second row (2, 4) of hook-shaped semi-blind grooves (40) being similar in shape, but circumferentially offset, **characterized in that** the two rows (1, 2, 3, 4) of hook-shaped semi-blind grooves (40) are laterally spaced from each other.

2. The tread of claim 1, wherein the hook-shaped semi-blind grooves (40) of the second row (2, 4) are oppositely inclined but similarly oriented relative to the hook-shaped semi-blind groove (40) of the first row (1,3), each hook-shaped semi-blind groove (40) of the second row (2) intersecting the other adjacent circumferentially continuous groove (20, 22).

3. The tread of claim 1, wherein the hook-shaped semi-blind grooves (40) of the second row (2, 4) are similarly inclined but oppositely oriented relative the hook-shaped semi-blind groove (40) of the first row (1,3), each hook-shaped semi-blind groove (40) of the second row (2) intersecting the other adjacent circumferentially continuous groove (20, 22).

4. The tread of claim 1, further **characterized by** a sipe incision (50) extending from and oriented in the same direction as a blind portion (42) of the hook-shaped semi-blind grooves (40) of the first row (1, 3) and the second row (2, 4).

5. The tread of claim 1, further **characterized by** three circumferentially continuous grooves (20,22,24), and two continuous ribs (30,32), each rib (30, 32) being adjacent to and between a pair of the circumferentially continuous grooves (20, 22, 24), and wherein the hook-shaped semi-blind grooves (40) of rib (30) are oppositely oriented relative to the hook-shaped semi-blind groove (40) in rib (32).

6. The tread of claim 1, wherein the hook-shaped semi-blind grooves (40) of each rib (30, 32) intersecting a common circumferentially continuous groove (22), intersect the common circumferentially continuous groove (22) at a substantially circumferentially aligned location relative to the intersection of the axially adjacent hook-shaped semi-blind grooves (40) of the other rib (30, 32).

7. The tread of claim 6, wherein the tread (12) has a pair of lateral tread edges (14,16) defining the tread width (TW) and the distance halfway between the lateral tread edges (14, 16) defines the equatorial plane (EP) of the tread (12), and the common circumferentially continuous groove (22) is centered at the equatorial plane (EP) of the tread (12).

8. The tread of claim 1, wherein the centerline (45) of the hook-shaped semi-blind grooves (40) is oriented at an angle θ in the range of 30° to 60° relative to the equatorial plane (EP) of the tread (12).

9. The tread of claim 1, wherein the centerline (45) of the hook-shaped semi-blind grooves (40) is oriented at an angle θ about 45° relative to the equatorial plane (EP) of the tread (12).

10. The tread of claim 1, further **characterized by** a pair of shoulder ribs (34, 36): a first shoulder rib (34) being adjacent to and lying between the first lateral edge (14) and a circumferentially continuous groove (20), and a second shoulder rib (36) being adjacent to the second lateral edges (16) and between a circumferentially continuous groove (24) and the second lateral edge (16).

11. The tread of claim 10, wherein each first and second shoulder rib (34, 36) has a plurality of circumferentially spaced curved grooves (46) intersecting and adjacent circumferentially continuous groove (20, 24) at locations in substantially linear alignment with the location of intersection of the hook-shaped semi-blind grooves (40) and the respective circumferentially continuous groove (20, 24).

12. The tread of claim 11, wherein each curved groove (46) changes orientation by about 90° as the groove (46) extends axially toward a lateral tread edge (14, 16).

13. The tread of claim 12, wherein each curved groove (46) has a full depth (D) at the lateral extremes and a reduced depth (d) therebetween the lateral extremes, (d) being about 50% of D or less 1.

## Patentansprüche

1. Ein Profil für einen Reifen (10), wobei das Profil (12) zwei oder mehr umfangsgerichtet durchlaufende Rillen (20,22,24) und eine durchlaufende Rippe (30,32) zwischen einem benachbarten Paar umfangsgerichtet durchlaufender Rillen (20,22) aufweist, und wobei das Profil (12) eine Vielzahl umfangsgerichtet beabstandeter hakenförmiger halb abgeschlossener Rillen (40) umfasst, die jede von einer sich umfangsgerichtet erstreckenden Rille (20,22,24) ausgehen, wovon die hakenförmigen halb abgeschlossenen Rillen (40) in zwei Reihen (1,2,3,4) in der durchlaufenden Rippe (30,32) angeordnet sind: einer ersten Reihe (1,3) hakenförmiger halb abgeschlossener Rillen (40), wobei jede hakenförmige halb abgeschlossene Rille (40) schräg geneigt ist, gemessen ab einer Mittellinie (45), die die hakenförmige halb abgeschlossene Rille (40) halbiert, und einer zweiten Reihe (2,4) hakenförmiger halb abgeschlossener Rillen (40), die von gleichartiger Form, jedoch umfangsgerichtet versetzt sind, **dadurch gekennzeichnet, dass** die zwei Reihen (1,2,3,4) hakenförmiger halb abgeschlossener Rillen (40) seitlich zueinander beabstandet sind.

2. Profil gemäß Anspruch 1, wobei die hakenförmigen halb abgeschlossenen Rillen (40) der zweiten Reihe (2,4) in Bezug zu der hakenförmigen halb abgeschlossenen Rille (40) der ersten Reihe (1,3) entgegengesetzt geneigt, jedoch gleichartig ausgerichtet sind, wobei jede hakenförmige halb abgeschlossene Rille (40) der zweiten Reihe (2) die andere benachbarte umfangsgerichtet durchlaufende Rille (20,22) schneidet.

3. Profil gemäß Anspruch 1, wobei die hakenförmigen halb abgeschlossenen Rillen (40) der zweiten Reihe (2,4) in Bezug zur hakenförmigen halb abgeschlossenen Rille (40) der ersten Reihe (1,3) gleichartig geneigt, jedoch entgegengesetzt ausgerichtet sind, wobei jede hakenförmige halb abgeschlossene Rille (40) der zweiten Reihe (2) die andere benachbarte umfangsgerichtet durchlaufende Rille (20,22) schneidet.

4. Profil gemäß Anspruch 1, weiterhin **gekennzeichnet durch** einen Lamelleneinschnitt (50), der sich von einem abgeschlossenen Teil (42) der hakenförmigen halb abgeschlossenen Rillen (40) der ersten Reihe (1,3) und der zweiten Reihe (2,4) erstreckt und in derselben Richtung ausgerichtet ist.

5. Profil gemäß Anspruch 1, weiter **gekennzeichnet durch** drei umfangsgerichtet durchlaufende Rillen (20,22,24) und zwei durchlaufende Rippen (30,32), wobei jede Rippe (30,32) einem Paar der umfangsgerichtet durchlaufenden Rillen (20,22,24) benachbart ist und zwischen diesen liegt, und wobei die hakenförmigen halb abgeschlossenen Rillen (40) von Rippe (30) in Bezug zu der hakenförmigen halb abgeschlossenen Rille (40) in Rippe (32) entgegengesetzt ausgerichtet sind.

6. Profil gemäß Anspruch 1, wobei die hakenförmigen halb abgeschlossenen Rillen (40) jeder Rippe (30,32), die eine gemeinsame umfangsgerichtet durchlaufende Rille (2) schneiden, die gemeinsame umfangsgerichtet durchlaufende Rille (22) an einer im Wesentlichen umfangsgerichtet ausgerichteten Stelle in Bezug zum Schnittpunkt der axial benachbarten hakenförmigen halb abgeschlossenen Rillen (40) der anderen Rippe (30,32) schneiden.

7. Profil gemäß Anspruch 6, wobei das Profil (12) ein Paar seitlicher Profilkanten (14,16) aufweist, die die Profilbreite (Tread Width = TW) definieren, und der Abstand auf halbem Weg zwischen den seitlichen Profilkanten (14,16) die Äquatorebene (EP) des Profils (12) definiert, und die gemeinsame umfangsgerichtet durchlaufende Rille (22) an der Äquatorebene (EP) des Profils (12) zentriert ist.

8. Profil gemäß Anspruch 1, wobei die Mittellinie (45) der hakenförmigen halb abgeschlossenen Rillen (40) in einem Winkel θ im Bereich von 30° bis 60° in Bezug zur Äquatorebene (EP) des Profils (12) ausgerichtet ist.

9. Profil gemäß Anspruch 1, wobei die Mittellinie (45) der hakenförmigen halb abgeschlossenen Rillen (40) in einem Winkel θ von etwa 45° in Bezug zur Äquatorebene (EP) des Profils (12) ausgerichtet ist.

10. Profil gemäß Anspruch 1, weiterhin **gekennzeichnet durch** ein Paar von Schulterrippen (34,36): eine erste Schulterrippe (34), benachbart zur ersten Seitenkante (14) und einer umfangsgerichtet durchlaufenden Rille (20) und zwischen diesen liegend, und eine zweite Schulterrippe (36) benachbart zu den zweiten Seitenkanten (16) und zwischen einer umfangsgerichtet durchlaufenden Rille (24) und der zweiten Seitenkante (16).

11. Profil gemäß Anspruch 10, wobei jede erste und zweite Schulterrippe (34,36) eine Vielzahl umfangsgerichtet beabstandeter gekrümmter Rillen (46) aufweist, schneidend und benachbart zur umfangsgerichtet durchlaufenden Rille (20,24) an Stellen in hauptsächlich linearer Fluchtung zur Stelle des Schnittpunkts der hakenförmigen halb abgeschlossenen Rillen (40) und der jeweiligen umfangsgerichtet durchlaufenden Rille (20,24).

12. Profil gemäß Anspruch 11, wobei jede gekrümmte Rille (46) die Orientierung um etwa 90° verändert, wenn die Rille (46) sich axial zu einer seitlichen Profilkante (14,16) hin erstreckt.

13. Profil gemäß Anspruch 12, wobei jede gekrümmte Rille (46) eine volle Tiefe (D) an den seitlichen Enden und eine verringerte Tiefe (d) zwischen den seitlichen Enden aufweist, wobei (d) etwa 50% von D oder weniger beträgt.

## Revendications

1. Bande de roulement pour un bandage pneumatique (10), la bande de roulement (12) possédant deux rainures continues (20, 22, 24) en direction circonférentielle ou plus et une nervure continue (30, 32) entre deux paires adjacentes de rainures continues (20, 22) en direction circonférentielle, et dans laquelle la bande de roulement (12) comprend plusieurs rainures (40) semi-borgnes, en forme de crochets, espacées en direction circonférentielle débutant chacune dans une rainure (20, 22, 24) s'étendant en direction circonférentielle, les rainures (40) semi-borgnes en forme de crochets étant arrangées en deux rangs (1, 2, 3, 4) dans la nervure continue (30, 32) : un premier rang (1, 3) de rainures (40) semi-borgnes en forme de crochets, chaque rainure (40) semi-borgne en forme de crochet étant inclinée en oblique lorsqu'on mesure à partir d'une ligne médiane (45) qui coupe en deux la rainure (40) semi-borgne en forme de crochet, et un deuxième rang (2, 4) de rainures (40) semi-borgnes en forme de crochets de configuration similaire, mais dans une position décalée en direction circonférentielle, **caractérisée en ce que** les deux rangs (1, 2, 3, 4) de rainures (40) semi-borgnes en forme de crochets sont espacés l'un de l'autre en direction latérale.

2. Bande de roulement selon la revendication 1, dans laquelle les rainures (40) semi-borgnes en forme de crochets du second rang (2, 4) sont d'inclinaison opposée, mais d'orientation similaire par rapport à celles des rainures (40) semi-borgnes en forme de crochets du premier rang (1, 3), chaque rainure (40) semi-borgne en forme de crochet du second rang (2) coupant l'autre rainure adjacente (20, 22) continue en direction circonférentielle.

3. Bande de roulement selon la revendication 1, dans laquelle les rainures (40) semi-borgnes en forme de crochets du second rang (2, 4) sont d'inclinaison similaire, mais d'orientation opposée par rapport à celles des rainures (40) semi-borgnes eh forme de crochets du premier rang (1, 3), chaque rainure (40) semi-borgne en forme de crochet du second rang (2) coupant l'autre rainure adjacente (20, 22) continue en direction circonférentielle.

4. Bande de roulement selon la revendication 1, **caractérisée en outre par** une incision (50) en forme de lamelle s'étendant à partir d'une portion borgne (42) des rainures (40) semi-borgnes en forme de crochets du premier rang (1, 3) et du second rang (2, 4), et étant orientée dans la même direction que celle de ladite portion.

5. Bande de roulement selon la revendication 1,
**caractérisée en outre par** trois rainures continues (20, 22, 24) en direction circonférentielle et par deux nervures continues (30, 32), chaque nervure (30, 32) étant disposée en position adjacente à une paire des rainures (20, 22, 24) continues en direction circonférentielle et entre chaque rainure de la paire, et dans laquelle les rainures (40) semi-borgnes en forme de crochets de la nervure (30) possèdent une orientation opposée par rapport à celle des rainures (40) semi-borgnes en forme de crochets dans la nervure (32).

6. Bande de roulement selon la revendication 1, dans laquelle les rainures (40) semi-borgnes en forme de crochets de chaque nervure (30, 32) coupant une rainure continue commune (22) en direction circonférentielle, coupent la rainure continue commune (22) en direction circonférentielle à un endroit disposé en alignement essentiellement circonférentiel avec l'intersection des rainures (40) semi-borgnes en forme de crochets de l'autre nervure (30, 32), adjacentes en direction axiale.

7. Bande de roulement selon la revendication 6, dans laquelle la bande de roulement 12 possède une paire de bords latéraux de bande de roulement (14, 16) définissant la largeur de bande de roulement (TW) et l'endroit situé à mi-distance entre les bords latéraux de bande de roulement (14, 16) définit le plan équatorial (EP) de la bande de roulement (12), la rainure continue commune (22) en direction circonférentielle étant centrée au plan équatorial (EP) de la bande de roulement (12).

8. Bande de roulement selon la revendication 1, dans laquelle la ligne médiane (45) des rainures (40) semi-borgnes en forme de crochets est orientée en formant un angle θ dans la plage de 30° à 60° par rapport au plan équatorial (EP) de la bande de roulement (12).

9. Bande de roulement selon la revendication 1, dans laquelle la ligne médiane (45) des rainures (40) semi-borgnes en forme de crochets est orientée en formant un angle θ d'environ 45° par rapport au plan équatorial (EP) de la bande de roulement (12).

10. Bande de roulement selon la revendication 1, **caractérisée en outre par** une paire de nervures d'épaulements (34, 36) : une première nervure d'épaulement (34) en position adjacente au premier bord latéral (14) et à une rainure continue en direction circonférentielle (20) et entre le premier bord latéral et ladite rainure, et une deuxième nervure d'épaulement (36) en position adjacente au deuxième bord latéral (16) et entre une rainure continue en direction circonférentielle (20) et le deuxième bord latéral (16).

11. Bande de roulement selon la revendication 10, dans laquelle chaque première et deuxième nervure d'épaulement (34, 36) possède plusieurs rainures courbes (46) espacées en direction circonférentielle, qui coupent une rainure (20, 24) continue en direction circonférentielle, et qui sont disposées en position adjacente à ladite rainure, à des endroits disposés en alignement essentiellement linéaire avec l'endroit d'intersection des rainures (40) semi-borgnes en forme de crochets et de la rainure respective (20, 24) continue en direction circonférentielle.

12. Bande de roulement selon la revendication 11, dans laquelle chaque rainure courbe (46) change d'orientation d'environ 90° lorsque la rainure (46) s'étend en direction axiale vers un bord latéral de bande de roulement (14, 16).

13. Bande de roulement selon la revendication 12, dans laquelle chaque rainure courbe (46) possède une profondeur totale (D) aux extrémités latérales et une profondeur réduite (d) entre les extrémités latérales, (d) représentant environ 50 % de D ou moins.
